# FASCICULE DE BREVET EUROPEEN

(11) **EP 2 908 316 B1**
(45) Date de publication et mention de la délivrance du brevet: **29.11.2017**
(21) Numéro de dépôt: 15155131.4
(22) Date de dépôt: 13.02.2015
(51) Int. Cl.: E21B 7/24, B28D 1/14, G21D 1/00

(54) **Procédé et installation de découpage d'un massif en béton renforcé**
Verfahren und Anlage zum Schneiden eines Massivbauteils aus Stahlbeton
Method and installation for cutting a reinforced concrete block

(30) Priorité: 13.02.2014 FR 1451136
(43) Date de publication de la demande: 19.08.2015
(73) Titulaire: Soletanche Freyssinet, 92500 Rueil Malmaison (FR)
(72) Inventeur: Connesson, Micael, 92500 RUEIL MALMAISON (FR); Termens, Florian, 92500 RUEIL MALMAISON (FR); Guillon, Christophe, 92500 RUEIL MALMAISON (FR); Binon, Stéphane, 92500 RUEIL MALMAISON (FR)
(74) Mandataire: Balesta, Pierre

(56) Documents cités:
- AU-A1- 2007 216 660
- DE-A1- 19 906 722
- JP-A- 2004 017 535
- JP-A- 2013 032 669

## Description

### Arrière-plan de l'invention

La présente invention concerne le domaine du démantèlement de structures, notamment le démantèlement des bâtiments d'enceinte d'une centrale nucléaire.

Traditionnellement, les bâtiments d'enceinte des centrales nucléaires sont constitués de massifs en béton renforcé ayant des épaisseurs importantes. Certains massifs peuvent en effet présenter des longueurs de béton à percer comprises entre 0,5 mètres et 30 mètres.

Par massif en béton renforcé, on entend une structure réalisée notamment en béton armé, béton riblonné, béton baryté, ou bien en béton précontraint.

La particularité d'un béton renforcé est qu'il contient de nombreux composants de renforcement, le plus souvent métalliques, tels que des câbles de précontrainte, des barres en acier, ou toute autre armature de ferraillage. Le béton renforcé présente donc une densité élevée. Sa résistance est également élevée, de l'ordre de 40 MPa ou plus.

Les opérations de démantèlement ou déconstruction d'une installation nucléaire, qui comprennent le démantèlement des bâtiments d'enceinte de l'installation, sont donc généralement longues et complexes à réaliser dès lors qu'elles requièrent la découpe de massifs en béton renforcé non seulement très épais, mais également très résistants.

Parmi les technologies existantes, telle que celle décrite dans DE 199 06 722, on connait l'utilisation du carottage diamant : un tube de perçage ayant une extrémité distale munie d'un organe de coupe ouvert est mis en rotation afin de forer le massif par carottage. Après extraction des carottes, on découpe les portions de massif situées entre les forages, par exemple en réalisant un sciage au câble diamanté.

Un tel procédé présente plusieurs inconvénients. Notamment, il présente un rendement faible et des performances limitées. En outre, il nécessite l'utilisation d'eau en quantité importante afin de lubrifier et refroidir l'organe de coupe. Un autre inconvénient est que, en cas de perte de dents de l'organe de coupe au fond du forage, il devient très difficile, voire impossible, de poursuivre le perçage en raison de la dureté des dents de l'organe de coupe qui ne peuvent être percées ou détruites.

### Objet et résumé de l'invention

Un but de l'invention est de proposer un procédé de découpage d'un massif en béton renforcé présentant une efficacité sensiblement supérieure à celle des procédés antérieurs.

Pour ce faire, l'invention porte tout d'abord sur un procédé de découpage d'un massif en béton selon la revendication 1. La réalisation du perçage en faisant vibrer le tube de perçage, et donc l'organe de perçage, permet de faciliter sensiblement la pénétration de l'organe de coupe dans le massif, grâce à quoi on diminue le temps nécessaire à la découpe du massif et au démantèlement de l'enceinte de l'installation nucléaire.

Comme mentionné précédemment, par « béton renforcé », on entend notamment le béton armé, riblonné, baryté, ainsi que le béton précontraint, et plus généralement tout type de béton renforcé comportant des armatures de ferraillage.

Par « extrémité distale », on entend l'extrémité du tube de perçage qui est distante du dispositif pour faire vibrer le tube de perçage. On appelle « extrémité proximale », l'extrémité du tube de perçage opposée à l'extrémité distale.

Le dispositif pour faire vibrer le tube de perçage est ainsi configuré pour générer des vibrations longitudinales dans le tube de perçage. Autrement dit, on génère des oscillations selon la direction longitudinale du tube de perçage.

Avantageusement, le générateur de vibrations permet de générer une onde de compression qui se propage selon la direction longitudinale du tube de perçage, depuis les moyens pour faire vibrer le tube de perçage, jusqu'à l'organe de coupe.

La mise en vibration de l'organe de coupe apporte l'énergie nécessaire au perçage du béton renforcé, c'est-à-dire au perçage du béton en tant que tel et des armatures métalliques.

On comprend également que, grâce à l'invention, le procédé de découpe peut se poursuivre en cas de perte de dents de l'organe de coupe dans le forage : l'organe de coupe venant au contact de la dent détachée, aura pour effet de mettre en vibration la dent détachée qui pourra alors, dans une certaine mesure, continuer à percer le massif. Lorsque le perçage est un carottage, la dent détachée pourra également être chassée dans le tube de perçage grâce au fait que la carotte est déstructurée du fait de la vibration qu'elle subit.

Dans le procédé antérieur, la carotte reste intègre dans le tube de perçage et la dent de l'organe de coupe détachée reste bloquée devant l'organe de coupe en rotation, si bien que les autres dents viennent frotter contre la dent détachée. Il s'ensuit une usure prématurée des autres dents de l'organe de coupe.

Un des intérêts de l'invention est donc de s'affranchir d'un tel problème. Grâce à l'invention, le perçage peut se poursuivre en cas d'endommagement de l'organe de coupe, notamment en cas de perte de tout ou partie des dents de l'organe de coupe.

Aussi, un avantage de l'invention est que le procédé est robuste vis-à-vis de l'endommagement ou de la perte de l'organe de coupe dans le forage.

Un autre intérêt du perçage par tube vibrant est de limiter les déviations tangentielles du tube de perçage. Ce phénomène apparait lors d'un perçage à l'aide d'un forage diamant rotatif traditionnel en raison de la vitesse de rotation élevée de l'organe de coupe. On comprend donc que, contrairement aux procédés connus, le procédé selon l'invention permet notamment d'assurer un perçage rectiligne.

Pour assurer le refroidissement de l'organe de coupe, on utilise un fluide de perçage. Ce dernier est par exemple injecté dans le tube de perçage, depuis son extrémité proximale vers son extrémité distale, lorsque l'organe de coupe est ouvert.

De manière avantageuse, le fluide de perçage est une mousse. L'utilisation de mousse présente plusieurs avantages : elle permet de refroidir le tube de perçage, de lubrifier l'organe de coupe et de retenir et véhiculer les poussières générées par le perçage. Un autre intérêt de la mousse est qu'elle nécessite au moins dix fois moins d'eau qu'un fluide de perçage classique.

Selon une variante, on utilise de l'air ou bien de l'eau, par exemple de l'eau brumisée dans un flux d'air.

Avantageusement, au cours de la réalisation du perçage, on récupère les effluents constitués d'un mélange de débris d'excavation et du fluide de perçage, on réalise un traitement des effluents récupérés et on utilise les effluents traités comme fluide de perçage.

On comprend donc que le fluide de perçage traité est immédiatement réinjecté dans le forage, ce qui permet avantageusement de confiner les débris de perçage tout en limitant la quantité de fluide de perçage nécessaire pour la mise en oeuvre du procédé de découpage.

Selon une autre variante, les effluents sont stockés dans des containers pour être traités postérieurement.

De préférence, mais pas exclusivement, le traitement des effluents comporte une étape de décantation. Les opérations de perçage sont réalisées verticalement, horizontalement, ou bien encore de manière inclinée par rapport à l'horizontale ou la verticale.

Le dispositif pour déplacer le tube de perçage selon sa direction longitudinale peut par exemple comprendre un chariot qui porte le tube de perçage tout en étant monté coulissant sur une glissière, lequel chariot est apte à générer une poussée axiale sur le tube de perçage.

De préférence, pour réaliser la découpe, on réalise une pluralité de perçages dans le massif, selon toute son épaisseur. Encore de préférence, les perçages présentent des axes sensiblement parallèles les uns aux autres.

Selon un premier mode de mise en oeuvre de l'invention, on effectue une succession de perçages sécants dans le massif en béton renforcé à l'aide de l'outil de perçage en faisant vibrer le tube de perçage, grâce à quoi on obtient une découpe continue.

Par « perçages sécants », on entend au moins deux perçages adjacents dont les sections transversales présentent une intersection commune. Dit autrement, la distance entre les axes des deux perçages sécants est inférieure à la somme des rayons desdits perçages.

On comprend donc que la succession des perçages sécants forme une découpe continue dans le bloc. On précise que les diamètres des perçages peuvent être différents d'un perçage à l'autre.

Avantageusement, en cas de déviation de l'un des perçages, on effectue une étape de réalésage du perçage ayant dévié en réalisant un perçage complémentaire dans ledit perçage ayant dévié, le perçage complémentaire ayant un diamètre supérieur au diamètre du perçage ayant dévié de sorte que le perçage complémentaire soit sécant à l'un des perçages adjacents au perçage ayant dévié.

De préférence, on réalise plusieurs perçages complémentaires avec des diamètres de perçage croissants, jusqu'à ce que le dernier perçage complémentaire et le perçage adjacent soient sécants sur toutes leurs longueurs.

Selon un deuxième mode de mise en oeuvre, on réalise au moins deux perçages primaires dans le massif en béton renforcé à l'aide de l'outil de perçage en faisant vibrer le tube de perçage, de manière que les perçages primaires soient distants l'un de l'autre ; puis on réalise une découpe de la portion de béton située entre les deux perçages primaires, grâce à quoi on obtient une découpe continue. On comprend donc que les deux perçages primaires ne sont pas sécants.

La découpe de la portion de béton située entre les deux perçages primaires peut par exemple consister en une opération de sciage au câble diamanté.

Toutefois, de manière préférentielle, pour découper la portion de béton située entre les deux perçages primaires, on réalise au moins un perçage secondaire dans le massif en béton renforcé à l'aide de l'outil de perçage en faisant vibrer le tube de perçage, ledit perçage secondaire étant réalisé entre les deux perçages primaires préalablement réalisés, de manière sécante aux deux perçages primaires, grâce à quoi la succession des perçages primaires et du perçage secondaire sécants aux perçages primaires forme une découpe continue dans le massif en béton renforcé.

On comprend donc que le perçage secondaire présente une intersection commune avec les perçages primaires préalablement réalisés.

Avantageusement, le diamètre du perçage secondaire est supérieur au diamètre des perçages primaires. Un intérêt est d'empêcher la déviation du tube de perçage vers l'un des perçages primaires lors de la réalisation du perçage secondaire.

Avantageusement, en cas de déviation de l'un des perçages primaires, on effectue en outre, après réalisation du perçage secondaire, une étape de réalésage du perçage primaire ayant dévié en réalisant un perçage complémentaire dans ledit perçage primaire, ledit perçage complémentaire ayant un diamètre supérieur au diamètre du perçage primaire de sorte que le perçage complémentaire soit sécant au perçage secondaire.

Si nécessaire, l'étape de réalésage peut être répétée jusqu'à ce que le perçage complémentaire et le perçage secondaire soient sécants sur toutes leurs longueurs.

Préférentiellement, on réalise une série de perçages primaires puis une série de perçages secondaires, chaque perçage secondaire étant réalisé entre deux perçages primaires, de manière sécante aux deux perçages primaires. Encore de préférence, les diamètres des perçages secondaires sont supérieurs aux diamètres des perçages primaires.

Encore de préférence, les perçages secondaires sont réalisés une fois que les perçages primaires ont été réalisés.

On assure ainsi la réalisation de perçages sécants sensiblement parallèles les uns aux autres, ce qui améliore la continuité et la vitesse de réalisation de la découpe.

Selon un aspect avantageux de l'invention au moins l'un des perçages est un carottage. Pour ce faire, l'organe de coupe est ouvert.

La carotte obtenue à l'issue du perçage est fracturée dans le tube de perçage en raison des vibrations. Une partie des débris de la carotte réduits à l'état de poussière peuvent ainsi être avantageusement évacués par le fluide de perçage. Ainsi, contrairement aux procédés antérieurs dans lesquels la carotte reste intègre dans le tube et doit être retirée du tube à l'issue de chaque perçage, le procédé selon l'invention permet de s'affranchir de l'étape de retrait la carotte hors du tube. Cela permet d'améliorer encore la vitesse d'exécution de l'opération de découpe du massif.

Selon une variante avantageuse, l'outil de perçage comporte en outre un dispositif pour mettre en rotation le tube de perçage, et le tube de perçage est mis en rotation pendant la réalisation dudit au moins un perçage.

Le dispositif pour mettre en rotation le tube de perçage comprend par exemple une tête rotative motorisée, bien connue par ailleurs. La vitesse de rotation est plus faible que celle utilisée dans les forages classiques, afin d'éviter le risque de déviation tangentiel décrit plus haut.

Un intérêt d'une mise en rotation, associée à la vibration, est de modifier continuellement la position des dents de coupe sur le front de coupe, afin que chaque dent parcoure le front de coupe. Cela permet d'obtenir une usure homogène des dents.

La vitesse de rotation est faible, de préférence comprise entre 10 et 100 RPM.

De préférence, on mesure le couple de rotation pendant l'exécution du perçage.

Plus généralement, et de manière avantageuse, on mesure des paramètres de perçage pendant la réalisation d'un premier perçage dans le massif en béton renforcé, et on réalise ensuite un deuxième perçage dans le massif en béton renforcé après avoir configuré l'outil de perçage à l'aide des paramètres mesurés lors de la réalisation du premier perçage.

Par configuration de l'outil de perçage, on entend le réglage des paramètres de perçage, ainsi que la sélection de l'organe de coupe.

Par « paramètre de perçage », on entend notamment mais pas exclusivement la poussée axiale exercée sur l'organe de coupe, la fréquence de vibration du tube de perçage, le couple de rotation du tube de perçage, le débit du fluide de perçage, et la vitesse de pénétration de l'organe de coupe dans le massif.

En d'autres termes, le suivi des paramètres de perçage mesurés lors du premier perçage permet d'obtenir une estimation des matériaux percés, ce qui permet d'optimiser la réalisation des perçages suivants en ajustant si besoin les paramètres de perçage et, éventuellement, en changeant l'organe de coupe.

A ce titre, plusieurs types d'organes de coupe peuvent être utilisés. Les organes de coupe, communément appelés taillants, sont munis de dents dont la disposition et la forme varient d'un organe de coupe à l'autre. Généralement, les dents sont disposées selon la périphérie du bord d'extrémité de l'organe de coupe.

Selon un aspect avantageux de l'invention, on mesure le couple appliqué au tube de perçage lors de la réalisation du perçage, et l'on détecte une éventuelle déviation de la direction de perçage grâce au couple mesuré.

Une augmentation de la valeur du couple de rotation en cours de perçage traduit une augmentation du frottement le long du tube de perçage, ce qui peut correspondre à une déviation de l'organe de coupe par rapport à la direction de perçage rectiligne désirée. Aussi, la mesure du couple de rotation au cours de l'opération de perçage permet de détecter une éventuelle déviation et, éventuellement, prendre des mesures correctives.

La présente invention porte également sur un procédé de démantèlement de bâtiments d'installations nucléaires comportant au moins un massif en béton renforcé, dans lequel on découpe ledit massif en béton renforcé par la mise en oeuvre du procédé de découpage selon l'invention.

L'invention porte enfin sur une installation de découpage d'un massif en béton selon la revendication 17. Avantageusement, le fluide de perçage est de la mousse, de l'eau ou de l'air.

Afin d'assurer le confinement des poussières générées lors du perçage et charriées par le fluide de perçage, l'installation selon l'invention comporte avantageusement en outre un dispositif de collecte des effluents générés lors de la réalisation des perçages.

De préférence, le dispositif de collecte comporte un collecteur à effluents fixé au massif en béton renforcé tout en entourant le tube de perçage, et un dispositif de traitement des effluents connecté au collecteur et au dispositif pour injecter un fluide de perçage à l'extrémité distale du tube de perçage .

Le dispositif de traitement est réalisé de manière à séparer les débris du fluide de perçage, ce dernier étant alors réinjecté, après traitement, dans le forage. Le dispositif de traitement comporte par exemple un bac de décantation et/ou un dispositif de filtration.

Un intérêt de la circulation du fluide de perçage en circuit fermé est de confiner les poussières et débris générés par le perçage.

### Brève description des dessins

L'invention sera mieux comprise à la lecture de la description qui suit de modes de réalisation de l'invention donnés à titre d'exemples non limitatifs, en référence aux dessins annexés, sur lesquels :
- la figure **1** illustre un exemple de réalisation d'une installation de découpage selon l'invention ;
- la figure **1A** est une vue de détail de l'extrémité distale du tube de perçage ;
- la figure **2** représente un exemple d'un organe de coupe de l'outil de perçage de l'installation de la figure **1** **;**
- la figure **3** illustre un premier mode de mise en oeuvre du procédé selon l'invention ;
- la figure **4** illustre un deuxième mode de mise en oeuvre du procédé selon l'invention ;
- la figure **5** illustre un troisième mode de mise en oeuvre du procédé selon l'invention ;
- la figure **6** illustre le massif découpé ;
- les figures **7A** et **7B** illustrent la mise en oeuvre de l'étape détection d'une éventuelle déviation du tube de perçage ;
- la figure **8** illustre un exemple d'une étape de réalésage consistant à réaléser l'un des perçages primaires ; et
- la figure **9** représente un organe de réalésage utilisé lors de l'étape de réalésage.

### Description détaillée de l'invention

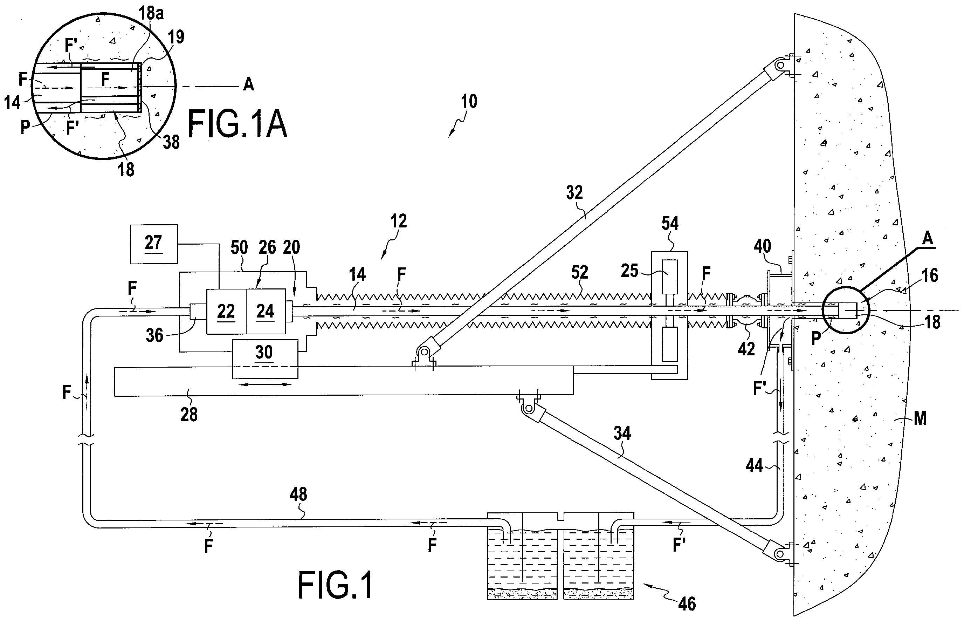

A l'aide de la figure **1****,** on va tout d'abord décrire une installation **10** de découpage d'un massif en béton renforcé **M.** Dans cet exemple, le massif en béton renforcé appartient à un bâtiment d'ensemble d'une centrale nucléaire (non représentée) à démanteler.

Comme il sera décrit plus en détail ci-après l'installation **10** est configurée pour mettre en oeuvre le procédé de découpage conforme à la présente invention.

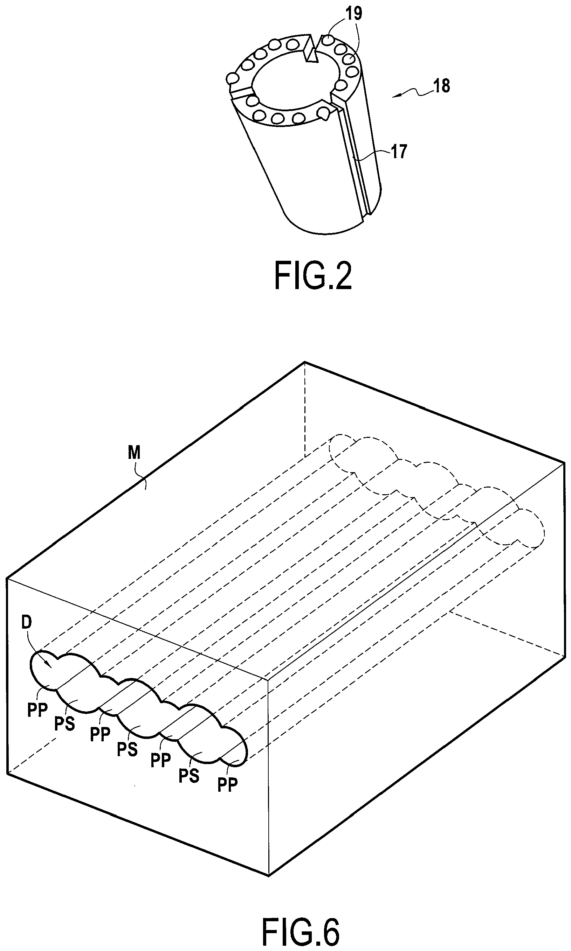

L'installation **10** comporte un outil de perçage **12** qui comprend un tube de perçage **14** ayant une direction longitudinale **A.** Le tube de perçage **14** présente une extrémité distale **16** qui porte un organe de coupe **18,** et une extrémité proximale **20,** opposée à l'extrémité distale **16.** L'organe de coupe **18,** mieux visible sur la figure **2****,** est ouvert et comporte une face de coupe munie de dents **19** s'étendant de manière annulaire. Il comporte également des rainures longitudinales **17** permettant de faciliter la circulation du fluide de perçage et l'évacuation des débris excavés.

L'extrémité proximale **20** du tube de perçage **14** est connectée à un dispositif **22** pour faire vibrer le tube de perçage **14** ainsi qu'à un dispositif **24** pour mettre en rotation le tube de perçage **14.** Dans cet exemple, le dispositif **24** pour entraîner en rotation le tube de perçage **14** comprennent un moteur hydraulique, tandis que le dispositif **22** pour faire vibrer le tube de perçage comprend un générateur de vibrations **22** configuré pour générer des vibrations ou oscillations longitudinales dans le tube de perçage 14. Ces vibrations longitudinales sont des ondes de compression qui se transmettent le long du tube de perçage **14** vers l'organe de coupe **18** situé à l'extrémité distale **16** du tube de perçage **14.**

Le moteur hydraulique et le générateur de vibrations constituent une tête de forage **26** reliée à l'extrémité proximale du tube de perçage **14.**

Le tube de perçage **14** et la tête de forage **26** sont montés coulissants sur une glissière **28** selon une direction parallèle à la direction de perçage désirée. L'outil de perçage **12** comporte en outre un dispositif **30** pour déplacer le tube de perçage **14** et la tête de forage **26** selon la direction longitudinale de la glissière **28.**

Comme on le comprend à l'aide de la figure **1****,** la glissière **28,** qui supporte le tube de perçage **14,** est fixée au massif **M** par l'intermédiaire de bras **32, 34,** lesquels sont fixés d'une part à la glissière **28** et, d'autre part, au massif **M.** En variante, l'installation pourrait être montée sur une machine de forage, par exemple montée sur chenilles, amenée devant le massif sans y être fixée.

Dans cet exemple, l'installation est configurée pour réaliser un perçage horizontal **P.** Sans sortir du cadre de la présente invention, l'installation pourrait être adaptée afin de réaliser un perçage incliné par rapport à l'horizontale, ou bien vertical.

La glissière est reliée à des mors **25** qui entourent le tube de perçage **14** et qui permettent notamment les opérations d'ajout et de retrait d'éléments de tube constituant le tube de perçage.

La tête de forage **26** est alimentée par une source d'alimentation **27** déportée.

L'installation **10** comporte en outre un dispositif **36** pour injecter un fluide de perçage **F** dans le massif **M** à l'extrémité distale **16** du tube de perçage **14.** Dans cet exemple, on comprend que, pendant la réalisation du perçage, on introduit le fluide de perçage **F** dans le tube de perçage de manière à évacuer les débris excavés par l'organe de coupe **18.** Le fluide de perçage **F** est introduit dans le tube de perçage par son extrémité proximale de façon à ce qu'il s'écoule dans le tube de perçage et qu'il ressorte en son extrémité distale. Comme on le comprend à l'aide de la figure **1A****,** l'organe de coupe **18** est ouvert de sorte que le fluide de perçage **F** traverse l'organe de coupe et s'écoule entre le front de coupe **38** et la face de coupe **18a** de l'organe de coupe **18.** L'injection de fluide est donc bien réalisée dans le massif **M** à l'extrémité distale du tube de perçage, en utilisant le tube de perçage comme conduite d'amenée de fluide. Après avoir été injecté à l'extrémité distale du tube de perçage, le fluide de perçage se mélange aux débris excavés et s'écoule entre le tube de perçage **14** et la paroi du perçage **P** en se dirigeant vers l'extrémité proximale du tube de perçage **14.**

Les effluents **F',** constitués du fluide de perçage **F** mélangé aux débris excavés, sont collectés dans un collecteur à effluents **40** qui est fixé au massif **M.** Le collecteur à effluents **40** entoure le tube de perçage **14.** L'étanchéité entre le collecteur à effluents **40** et l'atmosphère ambiante est réalisée grâce à une vanne à manchon **42** qui est fixée au collecteur **40** et qui entoure de manière étanche le tube de perçage **14.**

Comme on l'a illustré sur la figure **1****,** les effluents **F'** sont amenés par l'intermédiaire d'une conduite **44** vers un dispositif de traitement **46,** en l'espèce des bacs de décantation **46 ;** ces derniers sont par ailleurs reliés par le biais d'une autre conduite **48** au dispositif **36** pour injecter le fluide de perçage à l'extrémité distale du tube de perçage **14.**

On comprend donc que le fluide de perçage **F** parcourt un circuit fermé. Ce recyclage permet avantageusement de limiter la consommation en fluide de perçage. Dans cet exemple, le fluide de perçage est de l'eau. Il pourrait également s'agir de mousse.

En se référant à la figure **1****,** on comprend que le moteur hydraulique **24,** le générateur de vibrations **22,** le dispositif **36** pour injecter le fluide de perçage, le tube de perçage **14** et l'organe de coupe **18** constituent un dispositif pour découper le massif en béton renforcé **M** en réalisant un ou plusieurs perçages **P** à l'aide de l'outil de perçage **14** en faisant vibrer le tube de perçage tout en injectant le fluide de perçage **F** à l'extrémité distale **16** du tube de perçage **14.**

Par ailleurs, pour assurer le confinement du tube de perçage **14,** l'outil de perçage **12** comporte un premier caisson **50** dans lequel est logée la tête de forage **26.** Ce premier caisson **50** est du type boîte à gants qui permet aux opérateurs d'accéder à la tête de forage **26** de manière étanche.

L'outil de perçage **12** comporte en outre une manchette accordéon **52** qui entoure le tube de perçage **14** et qui s'étend depuis le caisson **50** jusqu'à la vanne à manchon **42.** Cette manchette accordéon est configurée pour se rétracter sur elle-même au fur et à mesure de l'avancement du perçage.

L'outil de perçage **12** comporte en outre un second caisson **54** du type boîte à gants. Dans le second caisson **54,** sont logés les mors **25.** Compte tenu de ce qui précède, on conçoit que l'installation de découpage selon l'invention est configurée de manière à permettre aux opérateurs de travailler en milieu ionisant en toute sécurité.

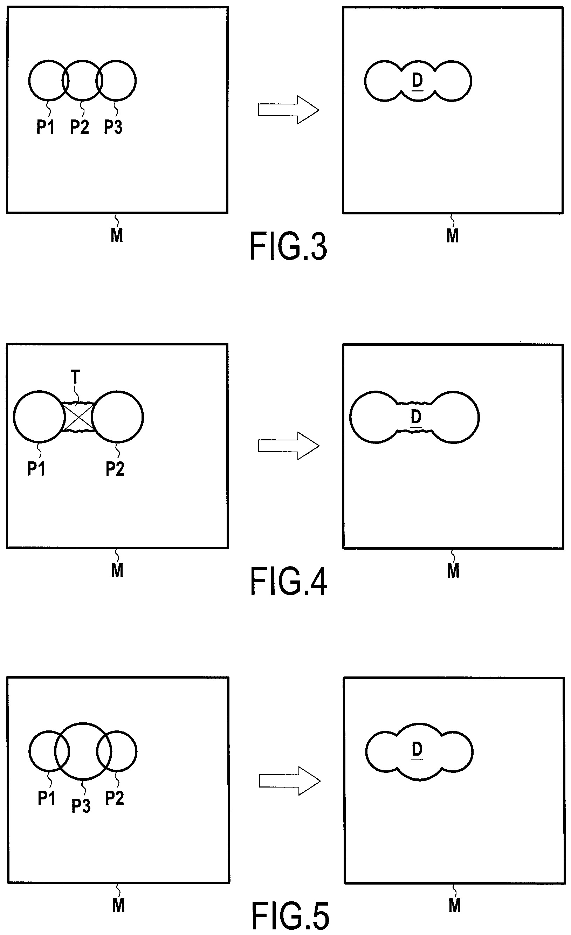

A l'aide des figures **3** à **5****,** on va maintenant décrire trois modes de mise en oeuvre du procédé de démantèlement selon l'invention. Ce procédé de démantèlement vise à déconstruire des bâtiments d'enceinte d'une centrale nucléaire comportant un ou plusieurs massifs en béton renforcé.

Ces figures illustrent plus particulièrement trois mises en oeuvre du procédé de découpage selon l'invention qui est lui-même mis en oeuvre dans le cadre du procédé de démantèlement selon l'invention.

Dans le premier mode de mise en oeuvre, illustré sur la figure **3****,** on effectue une succession de perçages sécants **P1, P2, P3** dans le massif en béton renforcé **M** à l'aide de l'outil de perçage **12** en faisant vibrer le tube de perçage **14,** grâce à quoi, on obtient une découpe continue **D** dans le massif **M.**

Dans ce premier mode de mise en oeuvre, on commence par réaliser le perçage **P1,** puis on réalise le perçage **P2,** de manière sécante au perçage **P1** puis, on réalise un troisième perçage **P3** sécant au deuxième perçage **P2** de façon à obtenir une découpe continue **D.**

Dans le deuxième mode de mise en oeuvre illustré sur la figure **4****,** on réalise au moins deux perçages primaires **P1, P2** dans le massif en béton renforcé **M** à l'aide de l'outil de perçage **12** en faisant vibrer le tube de perçage **14,** de manière que les perçages primaires **P1, P2** soient distants l'un de l'autre. Autrement dit, les perçages primaires **P1, P2** ne sont pas sécants.

Après avoir réalisé les deux perçages primaires **P1, P2,** on réalise une découpe de la portion de béton **T** qui est située entre les deux perçages primaires. Dans l'exemple de la figure **4****,** cette découpe est réalisée par un sciage au câble diamanté ; on obtient alors une découpe continue **D** schématisée sur la figure **4****.**

Le troisième mode de mise en oeuvre du procédé selon l'invention est une variante du deuxième mode de mise en oeuvre. Il se distingue du deuxième mode de mise en oeuvre par le fait que, pour réaliser la découpe de la portion de béton **T** située entre les deux perçages primaires **P1, P2,** on réalise au moins un perçage secondaire **P3** dans le massif en béton renforcé **M** à l'aide de l'outil de perçage en faisant vibrer le tube de perçage, ledit perçage secondaire **P3** étant réalisé entre les deux perçages primaires **P1, P2** préalablement réalisés, de manière sécante aux deux perçages primaires, grâce à quoi la succession des perçages primaires **P1, P2** et du perçage secondaire **P3** sécant aux perçages primaires forme une découpe continue **D** dans le massif en béton renforcé **M.**

Dans cet exemple, et de manière préférentielle, le diamètre du perçage secondaire **P3** est supérieur au diamètre des perçages primaires **P1, P2** et ce, comme expliqué plus haut, de manière à empêcher la déviation du tube de perçage **14** dans le perçage primaire lors de la réalisation du perçage secondaire **P3.**

Pour obtenir un diamètre plus important, il suffit de remplacer l'organe de coupe **18** utilisé pour les perçages primaires par un organe de coupe ayant un diamètre supérieur.

Les opérations de perçage décrites ci-dessus peuvent bien évidemment être répétées de manière à obtenir des découpes continues plus ou moins longues.

En particulier, sur la figure **6****,** on a illustré une variante du mode de mise en oeuvre de la figure **5** dans laquelle on a réalisé une série de perçages primaires **PP** puis une série de perçages secondaires **PS,** chaque perçage secondaire étant réalisé entre deux perçages primaires, de manière sécante aux deux perçages primaires de manière à obtenir une découpe continue **D.** Dans cet exemple de la figure **6****,** les diamètres des perçages secondaires sont également supérieurs aux diamètres des perçages primaires, là encore, pour éviter que le tube de perçage **14** ne chasse dans un des perçages primaires lors de la réalisation du perçage secondaire.

Dans l'exemple de la figure **6****,** on utilise l'organe de coupe illustré sur la figure **2****,** qui est ouvert. On conçoit donc que les perçages réalisés sont des carottages.

Comme décrit plus haut, la mise en vibration du tube de perçage a pour effet de déstructurer la majeure partie de la carotte dans le tube de perçage et d'en permettre l'évacuation grâce à la circulation du fluide de perçage.

Selon un autre aspect de l'invention, on mesure des paramètres de perçage pendant la réalisation d'un premier perçage dans le massif en béton renforcé. Par exemple, on mesure la poussée axiale exercée sur l'organe de coupe, la fréquence de vibration du tube de perçage, le couple de rotation du tube de perçage, le débit du fluide de perçage, ou bien encore la vitesse de pénétration de l'organe de coupe dans le massif **M.**

Ces paramètres de perçage sont analysés et permettent notamment de caractériser la structure du matériau à forer. Ces paramètres mesurés lors de la réalisation du premier perçage sont ensuite utilisés pour éventuellement configurer l'outil de perçage en vue de la réalisation d'un deuxième perçage dans le massif en béton renforcé **M.** Par exemple, l'organe de coupe ayant servi à la réalisation du premier perçage pourrait être remplacé par un organe de coupe ayant une structure de dents **19** différentes ; si nécessaire, le débit du fluide de perçage pourrait être ajusté, de même que la fréquence de vibration du tube de perçage ou bien encore la vitesse de déplacement du tube de perçage selon sa direction longitudinale **A.**

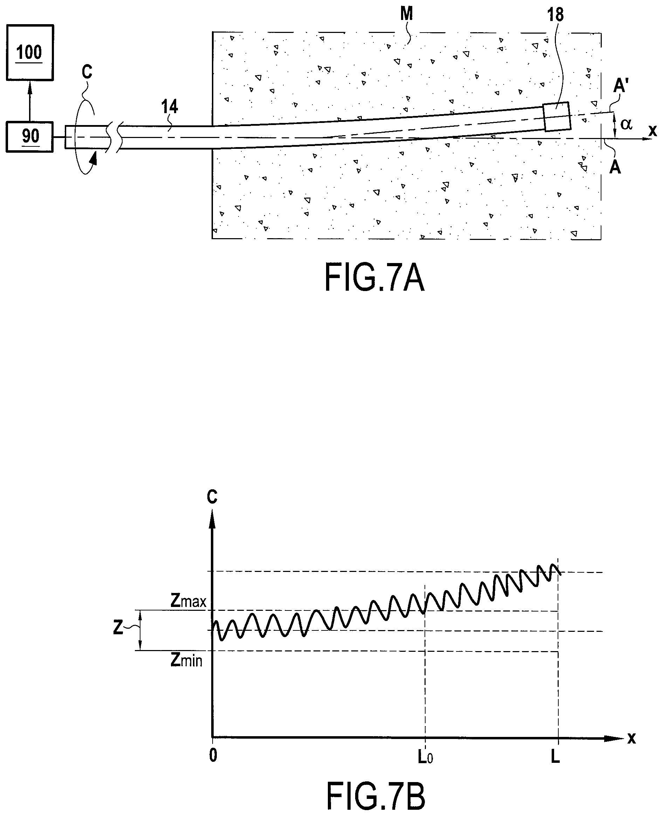

Selon un autre aspect avantageux de l'invention, on mesure le couple de rotation **C** du tube de perçage **14.** Comme illustré sur les figures **7A** et **7B****,** cette mesure du couple **C** permet de détecter une éventuelle déviation de la direction de perçage. Cette déviation est illustrée par l'angle **α** entre la direction désirée de perçage **A** et la direction effective de perçage **A'.**

Pour ce faire, l'installation comporte en outre un dispositif de mesure **90** du couple **C** et un dispositif de détection de déviation **100,** qui reçoivent les valeurs de couple mesurées.

Le graphe de la figure **7B** illustre la variation du couple mesuré en fonction de la profondeur du perçage.

Le dépassement de la limite supérieure Zmax de la bande de fonctionnement **Z** traduit une augmentation de l'effort tangentiel subi par le tube de perçage qui est synonyme de déviation.

En conséquence, la mesure du couple permet de détecter aisément la déviation éventuelle du tube de perçage par rapport à la direction de perçage désirée.

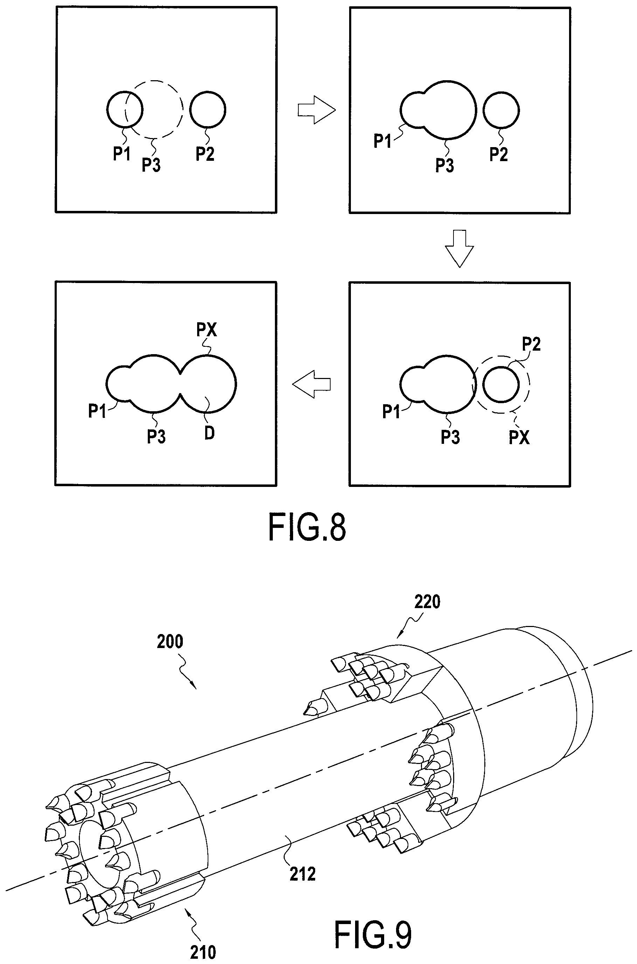

Si une déviation a été détectée, par exemple celle du deuxième perçage primaire **P2,** on effectue une étape réalésage du perçage primaire ayant dévié. Cette étape de réalésage est illustrée de manière schématique en figure **8****.**

Dans cette étape de réalésage, on effectue en outre, après réalisation du perçage secondaire **P3,** une étape de réalésage en réalisant un perçage complémentaire **PX** dans ledit perçage primaire ayant dévié, ledit perçage complémentaire **PX** ayant un diamètre supérieur au diamètre du perçage primaire ayant dévié de sorte que le perçage complémentaire soit sécant au perçage secondaire.

Le perçage complémentaire **PX** est réalisé en remplaçant l'organe de coupe **8** par un organe de réalésage **200,** tel que celui illustré en figure **9****.** Cet organe de réalésage **200** comporte un premier taillant **210** disposé à l'extrémité distale de l'organe de réalésage et présentant un premier diamètre sensiblement égal au diamètre du perçage primaire à réaléser. L'organe de réalésage **200** comporte en outre un second taillant **220** disposé en retrait axial par rapport au premier taillant **210.** Une portion tubulaire **212** s'étend entre le premier taillant **210** et le second taillant **220.** Le second taillant présente une forme de couronne entourant la portion tubulaire **212**

Comme on le constate sur la figure **9****,** le second taillant **220** a un second diamètre strictement supérieur au diamètre du premier taillant **210.** Le diamètre du second taillant correspond au diamètre du perçage complémentaire **PX.** On comprend que le premier taillant **210** et la portion tubulaire **212** guident le déplacement du tube de perçage dans le perçage **P2** à réaléser pendant que le second taillant **220** réalise le perçage complémentaire **PX** de plus grand diamètre. L'organe de réalésage **200** est choisi ici de façon que le perçage complémentaire **PX** soit sécant au perçage secondaire **P3.**

Bien entendu, l'étape de réalésage peut être mise en oeuvre sur le premier perçage primaire, ou sur le perçage secondaire.

On précise enfin que l'étape de réalésage peut également être mise en oeuvre dans les premier et deuxième modes de réalisation du procédé de découpage selon l'invention.

## Revendications

1. Procédé de découpage d'un massif en béton renforcé (M) dans lequel :
on fournit un outil de perçage (12) comprenant :
un tube de perçage (14) ayant une direction longitudinale (A) et présentant une extrémité distale (16) qui porte un organe de coupe (18) et une extrémité proximale (20) ;
un générateur de vibrations (22), connecté à l'extrémité proximale du tube de perçage, et adapté pour générer des vibrations longitudinales dans le tube de perçage, qui génèrent des ondes de compression se propageant selon la direction longitudinale du tube de perçage, depuis le générateur de vibrations jusqu'à l'organe de coupe ;
des moyens (36) pour injecter un fluide de perçage à l'extrémité distale du tube de perçage ;
des moyens (30) pour déplacer le tube de perçage selon sa direction longitudinale ; procédé dans lequel
on découpe le massif en béton renforcé (M) en réalisant au moins un perçage à l'aide de l'outil de perçage (12) en générant des vibrations longitudinales dans le tube de perçage à l'aide du générateur de vibrations (22), tout en injectant le fluide de perçage (F) dans le massif (M) à l'extrémité distale (16) du tube de perçage (14).

2. Procédé de découpage selon la revendication 1, dans lequel, on effectue une succession de perçages sécants (P1, P2, P3) dans le massif en béton renforcé (M) à l'aide de l'outil de perçage (12) en faisant vibrer le tube de perçage (14), grâce à quoi on obtient une découpe continue (D).

3. Procédé de découpage selon la revendication **2,** dans lequel, en cas de déviation de l'un des perçages, on effectue une étape de réalésage du perçage ayant dévié en réalisant un perçage complémentaire (PX) dans ledit perçage ayant dévié, le perçage complémentaire ayant un diamètre supérieur au diamètre du perçage ayant dévié de sorte que le perçage complémentaire soit sécant à l'un des perçages adjacents au perçage ayant dévié.

4. Procédé de découpage selon la revendication **1,** dans lequel :
on réalise au moins deux perçages primaires (P1, P2) dans le massif en béton renforcé (M) à l'aide de l'outil de perçage (12) en faisant vibrer le tube de perçage (14), de manière que les perçages primaires soient distants l'un de l'autre ;
on réalise une découpe de la portion de béton (T) située entre les deux perçages primaires, grâce à quoi on obtient une découpe continue (D).

5. Procédé selon la revendication **4,** dans lequel, pour réaliser la découpe de la portion de béton (T) située entre les deux perçages primaires (P1, P2), on réalise au moins un perçage secondaire (P3) dans le massif en béton renforcé (M) à l'aide de l'outil de perçage en faisant vibrer le tube de perçage, ledit perçage secondaire (P3) étant réalisé entre les deux perçages primaires (P1, P2) préalablement réalisés, de manière sécante aux deux perçages primaires, grâce à quoi la succession des perçages primaires (P1, P2) et du perçage secondaire (P3) sécants aux perçages primaires forme une découpe continue (D) dans le massif en béton renforcé (M).

6. Procédé de découpage selon la revendication **5,** dans lequel le diamètre du perçage secondaire (P3) est supérieur au diamètre des perçages primaires (P1, P2).

7. Procédé de découpage selon la revendication **5** ou **6,** dans lequel, en cas de déviation de l'un des perçages primaires (P2), on effectue en outre, après réalisation du perçage secondaire (P3), une étape de réalésage du perçage primaire ayant dévié (P2) en réalisant un perçage complémentaire (PX) dans ledit perçage primaire, ledit perçage complémentaire ayant un diamètre supérieur au diamètre du perçage primaire de sorte que le perçage complémentaire soit sécant au perçage secondaire.

8. Procédé de découpage selon l'une quelconque des revendications **5** à **7,** dans lequel on réalise une série de perçages primaires (PP) puis une série de perçages secondaires (PS), chaque perçage secondaire étant réalisé entre deux perçages primaires, de manière sécante aux deux perçages primaires.

9. Procédé de découpage selon la revendication **8,** dans lequel les diamètres des perçages secondaires (PS) sont supérieurs aux diamètres des perçages primaires (PP).

10. Procédé de découpage selon l'une quelconque des revendications précédentes, dans lequel au moins l'un des perçages (P) est un carottage.

11. Procédé de découpage selon l'une quelconque des revendications précédentes, dans lequel le fluide de perçage (F) est une mousse, de l'eau ou de l'air.

12. Procédé de découpage selon l'une quelconque des revendications précédentes, dans lequel, au cours de la réalisation du perçage, on récupère des effluents (F') constitués d'un mélange de débris d'excavation et du fluide de perçage, on réalise un traitement des effluents récupérés et on utilise les effluents traités comme fluide de perçage (F).

13. Procédé de découpage selon l'une quelconque des revendications précédentes, dans lequel l'outil de perçage (12) comporte en outre des moyens pour mettre en rotation le tube de perçage, et le tube de perçage est mis en rotation pendant la réalisation dudit au moins un perçage.

14. Procédé de découpage selon la revendication 13, dans lequel on mesure le couple (C) appliqué au tube de perçage (14) lors de la réalisation du perçage, et on détecte une éventuelle déviation de la direction de perçage grâce au couple mesuré.

15. Procédé de découpage selon l'une quelconque des revendications précédentes, dans lequel on mesure des paramètres de perçage pendant la réalisation d'un premier perçage dans le massif en béton renforcé, et on réalise ensuite un deuxième perçage dans le massif en béton renforcé après avoir configuré l'outil de perçage à l'aide des paramètres mesurés lors de la réalisation du premier perçage.

16. Procédé de démantèlement de bâtiments d'enceinte d'une centrale nucléaire comportant au moins un massif en béton renforcé, dans lequel on découpe ledit massif en béton renforcé par la mise en oeuvre du procédé de découpage selon l'une quelconque des revendications précédentes.

17. Installation (10) de découpage d'un massif en béton renforcé (M) pour la mise en oeuvre du procédé de découpage selon l'une quelconque des revendications **1** à **15,** ladite installation (10) comportant un outil de perçage (12) qui comprend:
un tube de perçage (14) ayant une direction longitudinale (A) et présentant une extrémité distale (16) qui porte un organe de coupe (18) et une extrémité proximale (20) ;
un générateur de vibrations, connecté à l'extrémité proximale du tube de perçage, et adapté pour générer des vibrations longitudinales dans le tube de perçage, qui génèrent des ondes de compression se propageant selon la direction longitudinale du tube de perçage, depuis le générateur de vibrations jusqu'à l'organe de coupe ;
des moyens (30) pour déplacer le tube de perçage selon sa direction longitudinale (A) ;
des moyens (36) pour injecter un fluide de perçage à l'extrémité distale (16) du tube de perçage (14).

18. Installation selon la revendication **17,** le fluide de perçage (F) étant de la mousse, de l'eau ou de l'air.

19. Installation selon la revendication **17** ou **18,** comportant en outre des moyens de collecte des effluents (F') générés lors de la réalisation des perçages.

20. Installation selon la revendication **19,** les moyens de collecte comportant un collecteur à effluents (40) fixé au massif en béton renforcé tout en entourant le tube de perçage, et des moyens de traitement (46) des effluents (F') connectés au collecteur et aux moyens (36) pour injecter le fluide de perçage à l'extrémité distale du tube de perçage.

## Patentansprüche

1. Verfahren zum Schneiden eines Blocks (M) aus bewehrtem Beton, bei dem:
ein Bohrwerkzeug (12) vorgesehen wird, umfassend:
ein Bohrgestänge (14) mit einer Längsrichtung (A) und aufweisend ein distales Ende (16), das ein Schneidelement (18) trägt, und ein proximales Ende (20),
einen Schwingungserzeuger (22), der mit dem proximalen Ende des Bohrgestänges verbunden ist und zur Erzeugung von Längsschwingungen im Bohrgestänge ausgebildet ist, die Druckwellen erzeugen, die sich in Längsrichtung des Bohrgestänges von dem Schwingungserzeuger zum Schneidelement ausbreiten,
Mittel (36) zum Einspritzen einer Bohrflüssigkeit am distalen Ende des Bohrgestänges,
Mittel (30) zum Bewegen des Bohrgestänges in seiner Längsrichtung, wobei bei dem Verfahren
der Block (M) aus bewehrtem Beton durch Herstellung mindestens einer Bohrung mit dem Bohrwerkzeug (12) unter Erzeugen von Längsschwingungen im Bohrgestänge mit dem Schwingungserzeuger (22) geschnitten wird, während die Bohrflüssigkeit (F) in den Block (M) am distalen Ende (16) des Bohrgestänges (14) eingespritzt wird.

2. Verfahren zum Schneiden gemäß Anspruch 1, bei dem in dem Block (M) aus bewehrtem Beton mit dem Bohrwerkzeug (12) durch Vibration des Bohrgestänges (14) eine Reihe von sich schneidenden Bohrungen (P1, P2, P3) hergestellt wird, wodurch ein kontinuierlicher Schnitt (D) erhalten wird.

3. Verfahren zum Schneiden gemäß Anspruch 2, wobei im Falle einer Abweichung einer der Bohrungen ein Schritt zum Nachbohren der abweichenden Bohrung durch Herstellen einer zusätzlichen Bohrung (PX) in der abweichenden Bohrung durchgeführt wird, wobei die zusätzliche Bohrung einen Durchmesser aufweist, der größer ist als der Durchmesser der abweichenden Bohrung, so dass die zusätzliche Bohrung eine der an die abweichende Bohrung angrenzenden Bohrungen schneidet.

4. Verfahren zum Schneiden gemäß Anspruch 1, wobei:
mindestens zwei Primärbohrungen (P1, P2) in dem Block (M) aus bewehrtem Beton mit dem Bohrwerkzeug (12) durch Vibration des Bohrgestänges (14) derart hergestellt werden, dass die Primärbohrungen räumlich voneinander getrennt sind,
der Betonabschnitt (T) zwischen den beiden Primärbohrungen geschnitten wird, wodurch ein kontinuierlicher Schnitt (D) erhalten wird.

5. Verfahren gemäß Anspruch 4, bei dem zum Schneiden des Betonabschnittes (T) zwischen den beiden Primärbohrungen (P1, P2) mindestens eine Sekundärbohrung (P3) in dem Block (M) aus bewehrtem Beton mit dem Bohrwerkzeug durch Vibration des Bohrgestänges hergestellt wird, wobei die Sekundärbohrung (P3) zwischen den beiden zuvor hergestellten Primärbohrungen (P1, P2) so ausgeführt wird, dass sie sich mit den beiden Primärbohrungen schneidet, wodurch die Aufeinanderfolge der Primärbohrungen (P1, P2) und der sich mit den Primärbohrungen schneidenden Sekundärbohrung (P3) einen kontinuierlichen Schnitt (D) im Block (M) aus bewehrtem Beton bildet.

6. Verfahren zum Schneiden gemäß Anspruch 5, wobei der Durchmesser der Sekundärbohrung (P3) größer ist als der Durchmesser der Primärbohrungen (P1, P2).

7. Verfahren zum Schneiden gemäß Anspruch 5 oder 6, wobei im Falle einer Abweichung einer der Primärbohrungen (P2) ferner nach Herstellen der Sekundärbohrung (P3) ein Schritt zum Nachbohren der abweichenden Primärbohrung (P2) durch Herstellen einer zusätzlichen Bohrung (PX) in dieser Primärbohrung durchgeführt wird, wobei die zusätzliche Bohrung einen Durchmesser aufweist, der größer ist als der Durchmesser der Primärbohrung, so dass die zusätzliche Bohrung die Sekundärbohrung schneidet.

8. Verfahren zum Schneiden gemäß einem der Ansprüche 5 bis 7, wobei eine Reihe von Primärbohrungen (PP) hergestellt wird, gefolgt von einer Reihe von Sekundärbohrungen (PS), wobei jede Sekundärbohrung zwischen zwei Primärbohrungen so ausgeführt wird, dass sie sich mit den beiden Primärbohrungen schneidet.

9. Verfahren zum Schneiden gemäß Anspruch 8, wobei der Durchmesser der Sekundärbohrungen (PS) größer ist als der Durchmesser der Primärbohrungen (PP).

10. Verfahren zum Schneiden gemäß einem der vorangehenden Ansprüche, wobei mindestens eine der Bohrungen (P) eine Kernbohrung ist.

11. Verfahren zum Schneiden gemäß einem der vorangehenden Ansprüche, wobei die Bohrflüssigkeit (F) Schaum, Wasser oder Luft ist.

12. Verfahren zum Schneiden gemäß einem der vorangehenden Ansprüche, wobei während des Bohrens Abwässer (F'), die aus einer Mischung von Bohrrückständen und Bohrflüssigkeit bestehen, zurückgewonnen werden, eine Behandlung der zurückgewonnenen Abwässer durchgeführt wird und die behandelten Abwässer als Bohrflüssigkeit (F) verwendet werden.

13. Verfahren zum Schneiden gemäß einem der vorangehenden Ansprüche, wobei das Bohrwerkzeug (12) ferner Mittel zum Drehen des Bohrgestänges aufweist und das Bohrgestänge während der Ausführung der mindestens einen Bohrung gedreht wird.

14. Verfahren zum Schneiden gemäß Anspruch 13, bei dem das beim Bohren auf das Bohrgestänge (14) aufgebrachte Drehmoment (C) gemessen wird und eine eventuelle Abweichung der Bohrrichtung durch das gemessene Drehmoment erfasst wird.

15. Verfahren zum Schneiden gemäß einem der vorangehenden Ansprüche, wobei Bohrparameter während der Durchführung einer ersten Bohrung im Block aus bewehrtem Beton gemessen werden und dann eine zweite Bohrung im Block aus bewehrtem Beton ausgeführt wird, nachdem das Bohrwerkzeug unter Verwendung der während der Ausführung der ersten Bohrung gemessenen Parameter konfiguriert wurde.

16. Verfahren zur Demontage von Gebäuden für Kernkraftwerksgehäuse mit mindestens einem Block aus bewehrtem Beton, wobei der Block aus bewehrtem Beton durch Anwendung des Verfahrens zum Schneiden gemäß einem der vorangehenden Ansprüche geschnitten wird.

17. Anlage (10) zum Schneiden eines Blocks (M) aus bewehrtem Beton für die Ausführung des Verfahrens zum Schneiden gemäß einem der Ansprüche 1 bis 15, wobei die Anlage (10) aufweist:
ein Bohrwerkzeug (12), umfassend:
ein Bohrgestänge (14) mit einer Längsrichtung (A) und aufweisend ein distales Ende (16), das ein Schneidelement (18) trägt, und ein proximales Ende (20),
einen Schwingungserzeuger, der mit dem proximalen Ende des Bohrgestänges verbunden ist und zur Erzeugung von Längsschwingungen im Bohrgestänge ausgebildet ist, die Druckwellen erzeugen, die sich in Längsrichtung des Bohrgestänges von dem Schwingungserzeuger zum Schneidelement ausbreiten, und
Mittel (30) zum Bewegen des Bohrgestänges in seiner Längsrichtung (A),
Mittel (36) zum Einspritzen einer Bohrflüssigkeit am distalen Ende (16) des Bohrgestänges(14).

18. Anlage gemäß Anspruch 17, wobei die Bohrflüssigkeit (F) Schaum, Wasser oder Luft ist.

19. Anlage gemäß Anspruch 17 oder 18, bei der ferner Auffangmittel für die bei den Bohrarbeiten anfallenden Abwässer (F') vorgesehen sind.

20. Anlage gemäß Anspruch 19, wobei die Auffangmittel einen Abwasserkollektor (40), der das Bohrgestänge umgebend am Block aus bewehrtem Beton befestigt ist, und Mittel (46) zur Behandlung der Abwässer (F'), die mit dem Kollektor und den Mitteln (36) zum Einspritzen der Bohrflüssigkeit am distalen Ende des Bohrgestänges verbunden sind, umfassen.

## Claims

1. A cutting method for cutting up a reinforced concrete mass (M), the method comprising the following steps:
providing a drill tool (12) comprising:
a drill tube (14) having a longitudinal direction (A) and presenting a distal end (16) that carries a cutter member (18)and a proximal end (20);
a vibration generator (22), connected to the proximal end of the drill tube, and suitable for generating longitudinal vibrations in the drill tube, that generate compression waves propagating along the longitudinal direction of the drill tube, from the vibration generator to the cutter member;
means (36) for injecting a drilling fluid at the distal end of the drill tube;
means(30) for moving the drill tube along its longitudinal direction; and
cutting the reinforced concrete mass (M) by drilling at least one hole with the help of the drill tool (12) by generating longitudinal vibrations in the drill tube with the help of the vibration generator (22) and simultaneously injecting the drilling fluid (F) into the mass (M) at the distal end (16) of the drill tube (14).

2. A cutting method according to claim 1, wherein a succession of intersecting drillholes (P1, P2, P3) is made in the reinforced concrete mass (M) with the help of the drill tool (12) while causing the drill tube (14) to vibrate, thereby obtaining a continuous line of cut (D).

3. A cutting method according to claim 2, wherein, in the event of one of the drillholes being deflected, a re-boring step is performed on the deflected drillhole by drilling an additional hole (PX) in said deflected drillhole, the additional drillhole having a diameter greater than the diameter of the deflected drillhole such that the additional drillhole intersects one of the drillholes adjacent to the deflected drillhole.

4. A cutting method according to claim 1, comprising the steps of:
drilling at least two primary holes (P1, P2) in the reinforced concrete mass (M) with the help of the drill tool (12) by causing the drill tube (14) to vibrate, the primary drillholes being spaced apart from each other; and
cutting away the portion of concrete (T) situated between the two primary drillholes, thereby obtaining a continuous line of cut (D).

5. A cutting method according to claim 4, wherein, in order to cut away the portion of concrete (T) situated between the two primary drillholes (P1, P2), at least one secondary hole (P3) is drilled in the reinforced concrete mass (M) with the help of the drill tool by causing the drill tube to vibrate, said secondary drillhole (P3) being made between the two previously drilled primary drillholes (P1, P2) so as to intersect both primary drillholes, whereby the succession of the primary drillholes (P1, P2) and of the secondary drillhole (P3) intersecting the primary drillholes forms a continuous line of cut (D) in the reinforced concrete mass (M).

6. A cutting method according to claim 5, wherein the diameter of the secondary drillhole (P3) is greater than the diameter of the primary drillholes (P1, P2).

7. A cutting method according to claim 5 or claim 6, wherein, in the event of one of the primary drillholes (P2) being deflected, after drilling the secondary hole (P3), a re-boring step is also performed of re-boring the deflected primary drillhole (P2) by drilling an additional hole (PX) in said primary drillhole, said additional drillhole having a diameter greater than the diameter of the primary drillhole such that the additional hole intersects the secondary drillhole.

8. A cutting method according to any one of claims 5 to 7, wherein a series of primary holes (PP) is drilled followed by a series of secondary holes (PS), each secondary hole being drilled between two primary drillholes so as to intersect both primary drillholes.

9. A cutting method according to claim 8, wherein the diameters of the secondary drillholes (PS) are greater than the diameters of the primary drillholes (PP).

10. A cutting method according to any preceding claim, wherein at least one of the drillholes (P) is drilled by coring.

11. A cutting method according to any preceding claim, wherein the drilling fluid (F) is a foam, water, or air.

12. A cutting method according to any preceding claim, wherein, during drilling, effluent (F') constituted by a mixture of excavation debris and drilling fluid is recovered, the recovered effluent is treated, and the treated effluent is used as drilling fluid (F).

13. A cutting method according to any preceding claim, wherein the drill tool (12) further includes means for setting the drill tube into rotation, and the drill tube is set into rotation while drilling said at least one hole.

14. A cutting method according to claim 13, wherein the torque (C) applied to the drill tube (14) while drilling the hole is measured, and wherein deflection, if any, of the drilling direction is detected by means of the measured torque.

15. A cutting method according to any preceding claim, wherein drilling parameters are measured while drilling a first hole in the reinforced concrete mass, and wherein a second hole is then drilled in the reinforced concrete mass after configuring the drill tool with the help of the parameters measured during drilling of the first hole.

16. A method of dismantling containment buildings of a nuclear power station including at least one reinforced concrete mass, wherein said reinforced concrete mass is cut up by performing the cutting method according to any preceding claim.

17. An installation (10) for cutting up a reinforced concrete mass (M) by performing the cutting method according to any one of claims 1 to 15, said installation (10) including a drill tool (12) comprising:
a drill tube (14) having a longitudinal direction (A) and presenting a distal end (16) carrying a cutter member (18) and a proximal end (20);
a vibration generator, connected to the proximal end of the drill tube, and suitable for generating longitudinal vibrations in the drill tube, that generate compression waves propagating in the longitudinal direction of the drill tube, from the vibration generator to the cutter member;
means (30) for moving the drill tube along its longitudinal direction (A);
means (36) for injecting a drilling fluid at the distal end (16) of the drill tube (14).

18. An installation according to claim 17, the drilling fluid (F) being foam, water, or air.

19. An installation according to claim 17 or claim 18, further including collector means for collecting the effluent (F') generated while drilling the holes.

20. An installation according to claim 19, the collector means comprising an effluent collector (40) fastened to the reinforced concrete mass so as to surround the drill tube, and treatment means (46) for treating effluent (F') connected to the collector and to the means (36) for injecting the drilling fluid into the mass from the distal end of the drill tube.
